# EUROPEAN PATENT APPLICATION

(11) **EP 4 679 781 A1**
(43) Date of publication of application: **14.01.2026**
(21) Application number: 23926371.8
(22) Date of filing: 30.06.2023
(51) Int. Cl.: H04L 12/66, H04L 12/22, H04L 41/06, H04L 43/08, H04L 9/40, H04L 45/64

(54) **INFORMATION PROCESSING SYSTEM, INFORMATION PROCESSING METHOD, AND INFORMATION PROCESSING PROGRAM**

(30) Priority: 03.03.2023 JP 2023033209
(71) Applicant: NTT Docomo Business, Inc., Tokyo 100-8019 (JP)
(72) Inventor: TAKATSU, Takeshi, Tokyo 100-8019 (JP); HATADA, Mitsuhiro, Tokyo 100-8019 (JP)
(74) Representative: Hoffmann Eitle
(86) International application number: PCT/JP2023/024528
(87) International publication number: WO 2024/185162

(57) **Abstract**

An information processing system (1) is an information processing system including: an upper NW device (100) being a device constituting an overlay network; and a lower NW device (200) being a device constituting an underlay network. In this system, the lower NW device (200) acquires information related to communication of a terminal connected to the lower NW device (200), detects unauthorized communication based on the acquired information related to communication of a terminal connected to the lower NW device (200), and notifies the upper NW device (100) of information regarding the detected unauthorized communication, and the upper NW device (100) blocks unauthorized communication notification of which is provided from the lower NW device (200) based on information regarding unauthorized communication.

## Description

### Technical Field

The present invention relates to an information processing system, an information processing method, and an information processing program.

### Background Art

Conventionally, there is a technique of detecting unauthorized communication. For example, there are known techniques of installing a firewall or an Intrusion Prevention System (IPS) in a gateway or monitoring communication to specify a terminal that performs suspicious communication or behavior.

### Citation List

### Non Patent Citation

Non Patent Literature 1: What is a C & C server? Countermeasure using automatic blocking of attack from PC infected with malware, [Search on June 20, 2023], Internet (https://www.ntt.com/bizon/sec/cybersec04.html)

### Summary of Invention

### Technical Problem

The known technique has a security problem. For example, there is a case where detection and blocking cannot handle the problem such as a case addressed to a personal computer (PC) immediately after infection.

The present invention has been made in view of the above, and aims to provide an information processing system, an information processing method, and an information processing program for achieving robust security.

### Solution to Problem

In order to solve the above-described problems and achieve the object, an information processing system includes an upper NW device being a device constituting an overlay network and a lower NW device being a device constituting an underlay network, wherein the upper NW device includes a blocker that blocks unauthorized communication notification of which is provided from the lower NW device based on information regarding unauthorized communication, and the lower NW device includes an acquirer that acquires information related to communication of a terminal connected to the lower NW device a detector that detects unauthorized communication based on information related to communication of a terminal connected to the lower NW device, acquired by the acquirer and a notifier that notifies the upper NW device of the information regarding the unauthorized communication detected by the detector.

### Advantageous Effects of Invention

According to the present invention, it is possible to achieve robust security.

### Brief Description of Drawings

FIG. 1 is a diagram for illustrating a conventional technique.
FIG. 2 is a diagram illustrating an example of a configuration of an information processing system according to an embodiment.
FIG. 3 is a diagram illustrating an example of a configuration of an upper NW device according to the embodiment.
FIG. 4 is a diagram illustrating an example of a configuration of a lower NW device according to the embodiment.
FIG. 5 is a diagram for illustrating an overview of processing performed by the information processing system according to the embodiment.
FIG. 6 is a diagram for illustrating an example of detection processing and blocking processing performed by the information processing system according to the embodiment.
FIG. 7 is a flowchart illustrating an example of a flow of processing performed by the information processing system according to the embodiment.
FIG. 8 is a diagram illustrating an example of a computer that executes an information processing program. Embodiments for Carrying Out the Invention

Hereinafter, embodiments of an information processing system, an information processing method, and an information processing program according to the present application will be described in detail with reference to the drawings. Note that the present invention is not limited by the embodiment. In the description of the drawings, the same portions are denoted by the same reference numerals, and redundant description is omitted.

### [Known technique]

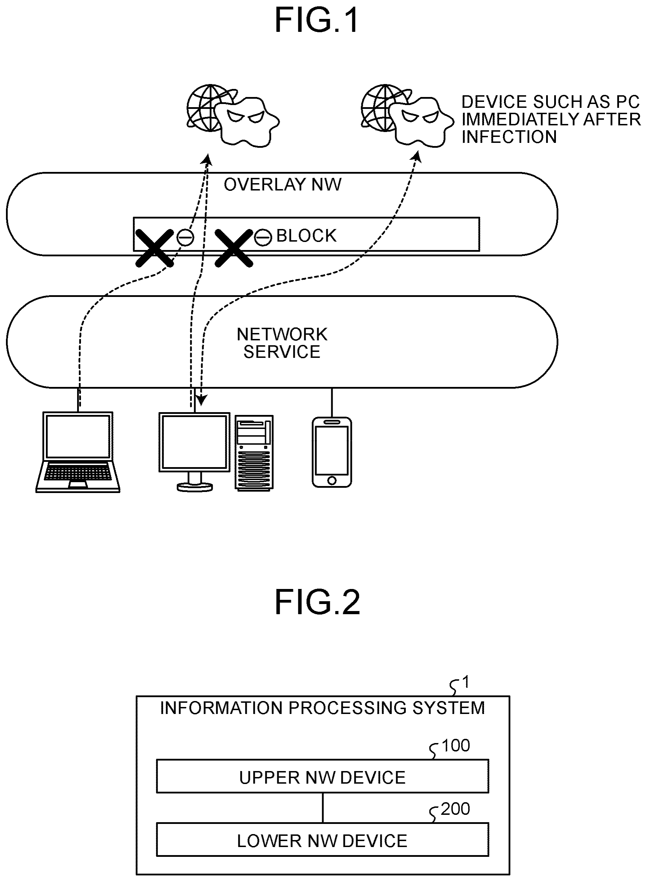

First, a known technique will be described with reference to FIG. 1. FIG. 1 is a diagram for illustrating a known technique.

In the following, a device constituting an overlay network will be denoted as an upper network (NW) device, while a device constituting an underlay network will be denoted as a lower NW device. Here, the upper NW device refers to, for example, a cloud proxy server or Unified Threat Management (UTM) equipment. The lower NW device refers to, for example, a network device such as Deep Packet Inspection (DPI) equipment, a router, and a switch.

In the conventional security countermeasures, networks are divided into a reliable "inside" and an unreliable "outside", and countermeasures are taken at the boundary. An example of the inside network is a data center connected by an in-house local area network (LAN) or a virtual private network (VPN), and an example of the outside network is the Internet. For example, as a countermeasure taken at the boundary, security equipment such as a firewall, a proxy, or an Intrusion Detection System (IDS)/Intrusion Prevention System (IPS) is installed at the boundary to monitor and control the communication, thereby blocking a cyberattack from the outside.

Such prior security measures assume that data and systems to be protected are inside the network. However, with the spread of the cloud, it is not unusual that there is a target to be protected on the Internet on the outside. In this manner, the targets to be protected are scattered in various locations to blur the boundary, making it difficult to take sufficient measures with a conventional mindset.

In view of this circumstance, the concept of zero trust is spreading. In the zero trust security service, various security countermeasures are taken on the assumption that all communications are not to be trusted. Specific examples of this include enhancement of user authentication by encryption of a communication path regardless of the inside and outside of the network, use of multi-factor authentication, and the like, and integrated log monitoring of the network and various devices connected to the network. A large number of security solutions for implementing the zero trust have already emerged. For example, there has been provided a measure such as Endpoint Detection and Response (EDR) that enables quick detection and handling of a cyberattack by monitoring a client device and analyzing a log.

Conventionally, there is a technique of detecting unauthorized communication. For example, there are known techniques of installing a firewall or IPS in a gateway or monitoring communication to specify a terminal that performs suspicious communication or behavior.

The known technique has a security problem. For example, as illustrated in FIG. 1, it is possible to specify a terminal that performs suspicious communication or behavior. However, in a case where a normally functioning PC is infected with malware or the like, it is difficult to handle the case with the detection and blocking, and suspicious communication might be permitted.

An information processing system 1 of the present embodiment described below is an information processing system including: an upper NW device 100 being a device constituting an overlay network; and a lower NW device 200 being a device constituting an underlay network. In this system, the upper NW device 100 blocks unauthorized communication based on information regarding unauthorized communication notification of which is provided from the lower NW device 200, the lower NW device 200 acquires information related to communication of a terminal connected to the lower NW device 200, detects unauthorized communication based on the acquired information related to the communication of the terminal connected to the lower NW device 200, and notifies the upper NW device 100 of the detected information regarding unauthorized communication.

With such an information processing system, effects such as achievement of robust security can be obtained.

Furthermore, the information processing system 1 provides a zero trust security service unique to a provider (carrier). The zero trust security uses a configuration in which the underlay NW and the overlay NW cooperate to perform protection in an Information and Communication Technology (ICT) environment with increased complexity and cyber risk by new ways of working such as working remotely and new business expansion by utilization of Internet of Things (IoT) and the like.

The information processing system 1 provides a secure Network as a Service (NaaS) type ICT service closely linking the function of the overlay NW and the function of the underlay NW. A company that receives the service of the information processing system 1 can easily start, revise, and cancel the service of the information processing system 1 immediately by applying from a management portal site without spending a cost for Information Technology (IT) vendor outsourcing or spending a cost for NW design, making it possible to reduce operational cost taken from design to application.

### [Configuration of information processing system]

Next, a configuration of the information processing system 1 will be described with reference to FIG. 2. As illustrated in FIG. 2, the information processing system 1 includes an upper NW device 100 and a lower NW device 200. Each of these devices will be described below. In the information processing system 1, the number of the upper NW devices 100 and the number of the lower NW devices 200 are not limited to one, and each device may be provided in plurality.

The upper NW device 100 is a device that controls an upper network of the information processing system 1. The upper NW device 100 blocks unauthorized communication by using information regarding unauthorized communication notification of which is provided from the lower NW device 200.

The lower NW device 200 is a device that controls a lower network of the information processing system 1. The lower NW device 200 acquires information related to communication of a terminal (for example, Office Automation (OA) equipment, IoT equipment, and the like) connected to the lower NW device 200, detects unauthorized communication based on the acquired information, and notifies the upper NW device 100 of the information regarding unauthorized communication.

### [Configuration of upper NW device]

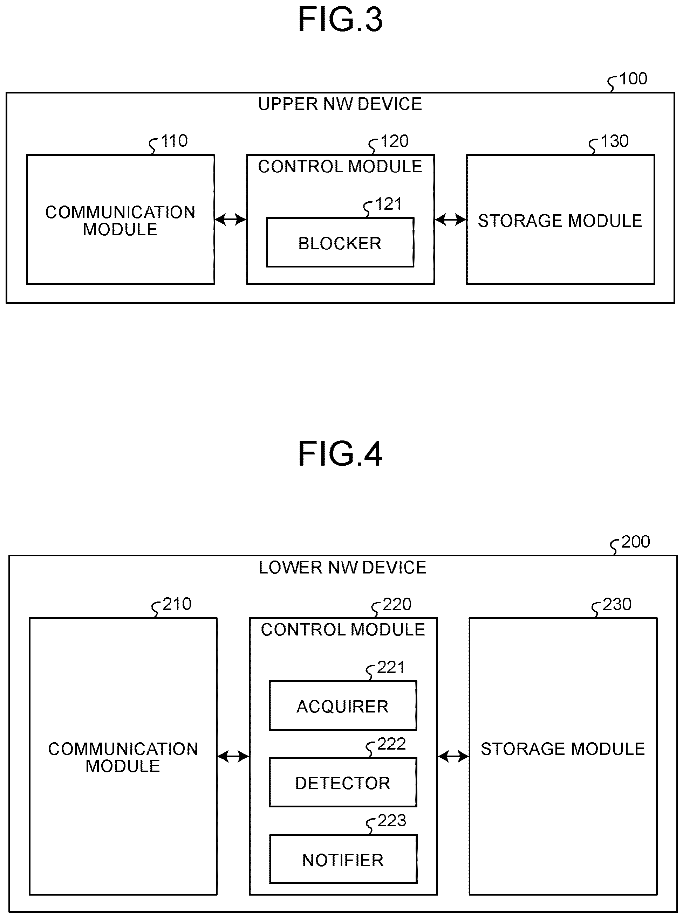

Next, a configuration of the upper NW device 100 will be described with reference to FIG. 3. As illustrated in FIG. 3, the upper NW device 100 includes a communication module 110, a control module 120, and a storage module 130. Note that these modules may be held by a plurality of devices in a distributed manner. Hereinafter, processing of these modules will be described.

The communication module 110 is implemented by a Network Interface Card (NIC) or the like, and enables communication between the control module 120 and an external device via a telecommunications link such as a Local Area Network (LAN) or the Internet. For example, the communication module 110 enables communication between the external device and the control module 120.

The storage module 130 is implemented by a semiconductor memory element such as Random Access Memory (RAM) or flash memory, or a storage device such as a hard disk or an optical disk. The information stored in the storage module 130 includes, for example, terminal information managed by the upper NW device 100, terminal information managed by the lower NW device 200, information related to communication of a terminal connected to the lower NW device 200, information related to unauthorized communication, information regarding detected unauthorized communication, other information necessary for detecting unauthorized communication, and other information necessary for blocking unauthorized communication. Here, the information related to unauthorized communication includes information such as the type, terminal information, and an IP address of a communication destination of unauthorized communication. Note that the information stored in the storage module 130 is not limited to the example described above.

The control module 120 is implemented by using a Central Processing Unit (CPU), a Network Processor (NP), a Field Programmable Gate Array (FPGA), or the like, and executes a processing program stored in the memory. As illustrated in FIG. 3, the control module 120 includes a blocker 121. Hereinafter, each part included in the control module 120 will be described.

The blocker 121 blocks the unauthorized communication based on the information regarding the unauthorized communication notification of which is provided from the lower NW device 200. For example, blocker 121 blocks the communication of the unauthorized communication to the communication destination by using the information regarding the unauthorized communication notification of which is provided from the lower NW device 200. For example, the blocker 121 blocks unauthorized communication to the communication destination by using the information regarding the type and the IP address of unauthorized communication notification of which is provided by a notifier 223.

For example, the blocker 121 blocks communication of unauthorized communication to the communication destination using filtering by adding information regarding the IP address of the unauthorized communication destination notification of which is provided by the notifier 223 to the list of IP addresses that are not permitted to perform communication.

### [Configuration of lower NW device]

Next, a configuration of the lower NW device 200 will be described with reference to FIG. 4. As illustrated in FIG. 4, the lower NW device 200 includes a communication module 210, a control module 220, and a storage module 230. Note that these modules may be held by a plurality of devices in a distributed manner. Hereinafter, processing of these modules will be described.

The communication module 210 is implemented by an NIC or the like, and enables communication between the control module 220 and an external device via a telecommunications link such as a LAN or the Internet. For example, the communication module 210 enables communication between the external device and the control module 220.

The storage module 230 is implemented by a semiconductor memory element such as RAM or flash memory, or a storage device such as a hard disk or an optical disk. The information stored in the storage module 230 includes, for example, terminal information managed by the upper NW device 100, terminal information managed by the lower NW device 200, information related to communication of a terminal connected to the lower NW device 200, information related to unauthorized communication, information regarding detected unauthorized communication, and other information necessary for detecting unauthorized communication. Here, the information related to the unauthorized communication stored in the storage module 230 includes information obtained by analyzing communication content involving the lower NW device 200 together with information regarding past cyberattacks and the like stored in an external device (integrated security analysis platform). Note that the information stored in the storage module 230 is not limited to the example described above.

The control module 220 is implemented by using a CPU, an NP, an FPGA, or the like, and executes a processing program stored in the memory. As illustrated in FIG. 4, the control module 220 includes an acquirer 221, a detector 222, and a notifier 223. Hereinafter, each part included in the control module 220 will be described.

The acquirer 221 acquires information related to communication of a terminal connected to the lower NW device 200. For example, the acquirer 221 acquires information related to communication of OA equipment or IoT equipment connected to the lower NW device 200.

For example, the acquirer 221 acquires, as information related to communication, flow data including communication date/time, a connection destination IP address, and a connection source IP address.

The detector 222 detects unauthorized communication based on the information related to the communication of the terminal connected to the lower NW device 200 acquired by the acquirer 221. For example, the detector 222 detects unauthorized communication by performing matching between the information related to the communication of the terminal connected to the lower NW device 200 acquired by the acquirer 221 and the information related to unauthorized communication stored in the storage module 230.

The detector 222 may also detect unauthorized communication by performing matching between the information related to communication of the terminal connected to the lower NW device 200 transmitted from the lower NW device 200 and the information related to unauthorized communication stored in an external device.

Note that the detector 222 may detect the information itself regarding the unauthorized communication stored in the storage module 130 as unauthorized communication. For example, the detector 222 may detect, as unauthorized communication, information itself obtained by analyzing communication content related to the lower NW device 200 and stored in the storage module 130 together with information regarding past cyberattacks and the like stored in the external device.

For example, the detector 222 performs detection according to characteristics of the communication, such as abnormal traffic fluctuation and an abnormal traffic pattern, for example, as Internet Serves Provider (ISP) data collected in the underlay NW. Note that the detector 222 may use any existing detection method.

The notifier 223 notifies the upper NW device 100 of the information regarding the unauthorized communication detected by the detector 222. For example, as information regarding unauthorized communication detected by the detector 222, the notifier 223 notifies the upper NW device 100 of information such as a detection date/time, a detection type, a connection destination IP address, and a connection source IP address of the unauthorized communication.

In this manner, when unauthorized communication has been detected by the detector 222, the notifier 223 immediately notifies the upper NW device 100 of information regarding the unauthorized communication. Therefore, by adding an unauthorized IP address to the list of the IP addresses that are not permitted to perform communication, the upper NW device 100 can immediately reflect the information regarding the unauthorized communication onto overlay services, making it possible to allow the overlay NW and the underlay NW to cooperate with each other to improve the unauthorized communication detection accuracy.

### [Outline of processing performed by information processing system]

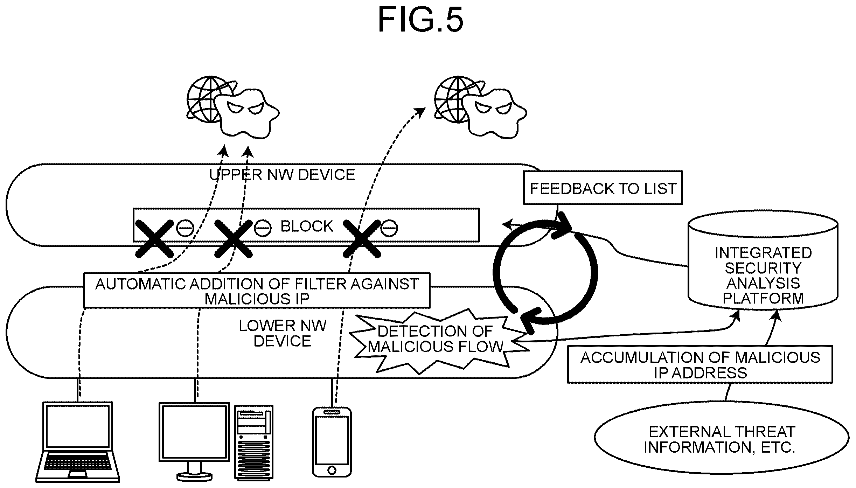

Next, processing performed by the information processing system 1 will be described with reference to FIG. 5. FIG. 5 is a diagram for illustrating an outline of processing performed by the information processing system 1.

First, the acquirer 221 of the lower NW device 200 acquires information related to communication of a terminal connected to the lower NW device 200. For example, the information related to communication of OA equipment, IoT equipment, or the like connected to the lower NW device 200 is acquired.

Subsequently, the detector 222 of the lower NW device 200 detects unauthorized communication based on the information related to the communication of the terminal connected to the lower NW device 200 acquired by the acquirer 221.

Subsequently, the notifier 223 of the lower NW device 200 notifies the upper NW device 100 of information regarding unauthorized communication detected by the detector 222.

The blocker 121 of the upper NW device 100 blocks the communication of the unauthorized communication to the communication destination based on the information regarding the unauthorized communication notification of which is provided by the notifier 223.

The blocker 121 cooperates with an external device, adds the IP address of a malicious terminal to the list, and performs filtering. For example, the blocker 121 uses a database that stores an IP address of a Command and Control server (C2) server discovered through analysis of flow data or analysis of Distributed Denial of Service (DDoS) in the underlay NW to perform access control according to an Access Control List (ACL) of a firewall being one of security functions of the UTM which is the upper NW device 100, and blocks communication to the C2.

In this manner, the upper NW device 100 intensively collects the detection result of the malicious flow detected in each underlay NW, adds the detection result to the list of the IP addresses not permitted to perform communication, and blocks unauthorized communication in the overlay NW, making it possible to increase the detection accuracy. Furthermore, even in a case where the user uses the overlay NW alone and the underlay NW is implemented by another company, the upper NW device 100 achieves blocking in the overlay NW, making it possible to accurately provide such a user with a service of blocking unauthorized communication.

Regarding the information processing system 1, the overlay NW and the underlay NW are provided by the same provider. In addition, the user who uses the information processing system 1 can perform flexible use of the system, for example, using only the overlay NW of this system and using the underlay NW of another company.

In this manner, the information processing system 1 allows the upper NW device 100 and the lower NW device 200 to closely cooperate with each other to detect and block unauthorized communication.

### [Detection/blocking processing performed by information processing system]

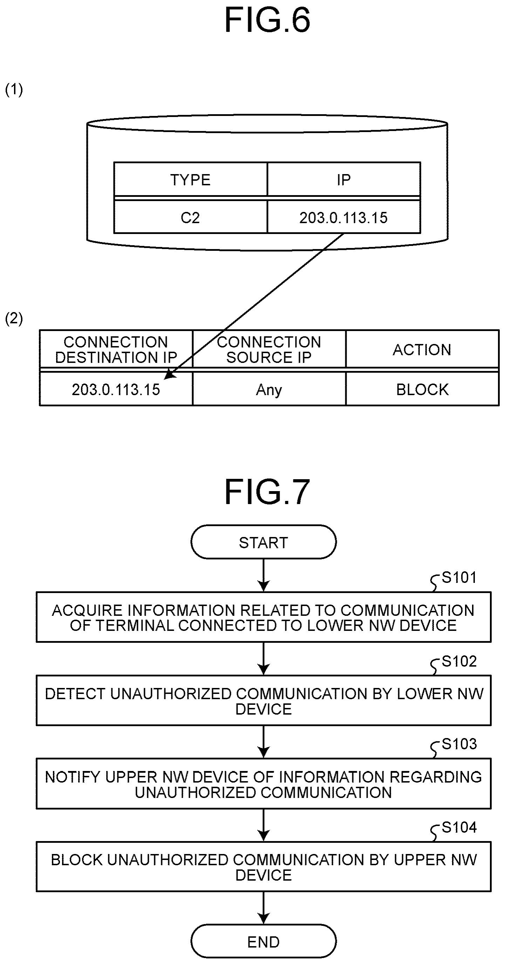

Next, detection processing and blocking processing performed by the information processing system 1 will be described with reference to FIG. 6. FIG. 6 is a diagram for illustrating an example of detection processing and blocking processing performed by the information processing system 1.

As illustrated in FIG. 6(1), the storage module 230 of the lower NW device 200 stores information related to unauthorized communication such as a type of unauthorized communication destination and an IP address. Here, the information related to the unauthorized communication stored in the storage module 230 may be information obtained by analyzing communication content involving the lower NW device 200 together with information regarding past cyberattacks and the like stored in an external device.

For example, the storage module 230 stores information related to communication of a terminal connected to the lower NW device 200 and information related to unauthorized communication, such as a type of an unauthorized communication destination and an IP address, obtained by analyzing information and past DDoS attack information.

The detector 222 of the lower NW device 200 detects unauthorized communication by performing matching between the information related to the communication of the terminal connected to the lower NW device 200 acquired by the acquirer 221 and the information related to unauthorized communication stored in the storage module 230. At this time, the detector 222 may detect the information itself regarding the unauthorized communication stored in the storage module 130 as unauthorized communication. For example, the detector 222 detects the type "C2 server" and the IP address "203.0.113.15" as unauthorized communication.

The notifier 223 of the lower NW device 200 notifies the upper NW device 100 of the information regarding the unauthorized communication detected by the detector 222 (type "C2 server", IP address "203.0.113.15").

Subsequently, the blocker 121 of the upper NW device 100 blocks the communication of the unauthorized communication to the communication destination by using the information regarding the unauthorized communication notification of which is provided from the lower NW device 200. For example, as illustrated in FIG. 6(2), the blocker 121 blocks communication of unauthorized communication to the communication destination by filtering by adding information regarding the IP address "203.0.113.15" of the unauthorized communication destination notification of which is provided to the list of IP addresses not permitted to perform communication.

In this manner, the information processing system 1 allows the upper NW device 100 and the lower NW device 200 to cooperate with each other to detect unauthorized communication and block unauthorized communication.

### [Flowchart]

Next, a flow of processing performed by the information processing system 1 will be described with reference to FIG. 7. Note that the following steps can be executed in different orders, and may include processing to be omitted.

First, the acquirer 221 of the lower NW device 200 acquires information related to communication of a terminal connected to the lower NW device 200 (Step S101). For example, the acquirer 221 acquires information related to communication of OA equipment or IoT equipment connected to the lower NW device 200.

Subsequently, the detector 222 of the lower NW device 200 detects unauthorized communication based on the information related to the communication of the terminal connected to the lower NW device 200 acquired by the acquirer 221 (Step S102). For example, the detector 222 detects unauthorized communication by performing matching between the information related to the communication of the terminal connected to the lower NW device 200 acquired by the acquirer 221 and the information related to unauthorized communication stored in the storage module 130.

The notifier 223 of the lower NW device 200 notifies the upper NW device 100 of the information regarding the unauthorized communication detected by the detector 222 (Step S103). For example, the notifier 223 notifies the upper NW device 100 of information such as a type and an IP address as the information regarding unauthorized communication detected by the detector 222.

The blocker 121 of the upper NW device 100 blocks the unauthorized communication based on the information regarding the unauthorized communication notification of which is provided by the notifier 223 (Step S104). For example, the blocker 121 blocks the communication of the unauthorized communication to the communication destination using the information regarding the unauthorized communication notification of which is provided by the notifier 223.

### [Effects]

The information processing system 1 according to the embodiment is an information processing system including: the upper NW device 100 being a device constituting an overlay network; and a lower NW device 200 being a device constituting an underlay network. In this system, the upper NW device 100 includes the blocker 121 that blocks unauthorized communication based on information regarding unauthorized communication notification of which is provided from the lower NW device 200, and the lower NW device 200 includes: an acquirer 221 that acquires information related to communication of a terminal connected to the lower NW device 200; the detector 222 that detects unauthorized communication based on information related to communication of a terminal connected to the lower NW device 200 acquired by the acquirer 221; and the notifier 223 that notifies the upper NW device 100 of the information regarding unauthorized communication detected by the detector 222.

With this configuration of the information processing system 1, the lower NW device 200 detects unauthorized communication from the acquired information, notifies the upper NW device 100 of the information regarding the detected unauthorized communication and blocks the unauthorized communication, thereby achieving robust security.

In the information processing system 1 according to the embodiment, the detector 222 in the lower NW device 200 detects unauthorized communication by performing matching between the information related to the communication of the terminal connected to the lower NW device 200 acquired by the acquirer 221 and the information related to unauthorized communication stored in the storage module 230.

With this processing of detecting unauthorized communication by performing matching between the information related to the communication of the terminal connected to the lower NW device 200 and the information related to the unauthorized communication, the information processing system 1 can achieve robust security.

In the information processing system 1 according to the embodiment, the blocker 121 in the upper NW device 100 uses the information regarding the unauthorized communication notification of which is provided from the lower NW device 200 to block the communication of the unauthorized communication to the communication destination.

With this configuration of blocking communication of unauthorized communication to the communication destination using the information regarding unauthorized communication notification of which is provided, the information processing system 1 can achieve robust security.

### [Program]

It is also possible to create a program in which the processing executed by the information processing system 1 in the above embodiment is described in a language executable by a computer. In this case, by execution of the program by the computer, effects similar to those of the above embodiment can be obtained. Furthermore, the program may be recorded in a computer-readable recording medium, and the program recorded in the recording medium may be read and executed by the computer to implement processing similar to the above-described embodiment.

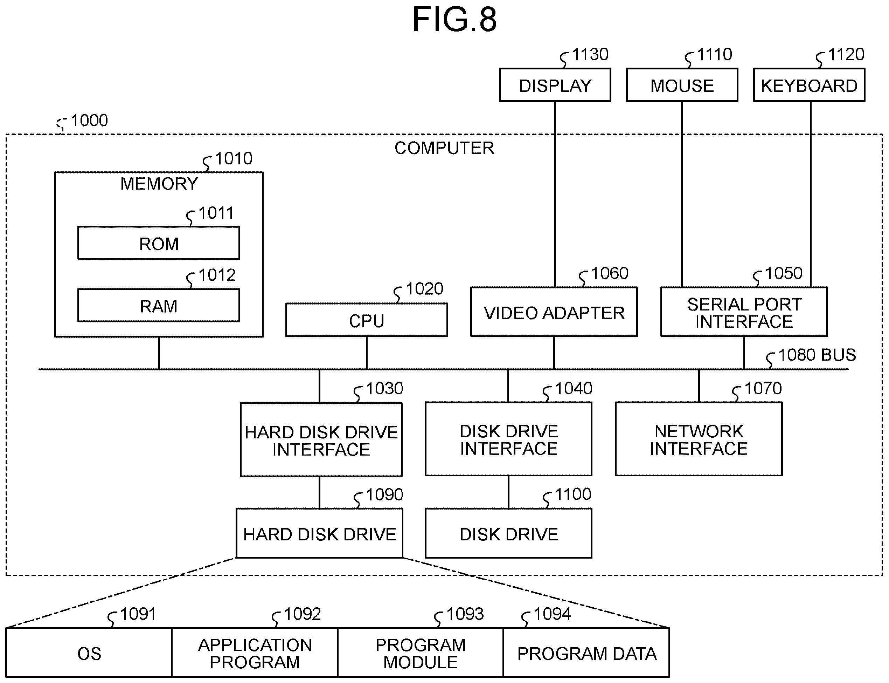

FIG. 8 is a diagram illustrating an example of a computer that executes an information processing program. As illustrated in FIG. 8, a computer 1000 includes, for example, memory 1010, a CPU1020, a hard disk drive interface 1030, a disk drive interface 1040, a serial port interface 1050, a video adapter 1060, and a network interface 1070. These units are connected to each other via a bus 1080.

The memory 1010 includes read only memory (ROM) 1011 and RAM 1012. The ROM 1011 stores, for example, a boot program such as a Basic Input Output System (BIOS). The hard disk drive interface 1030 is connected to a hard disk drive 1090. The disk drive interface 1040 is connected to a disk drive 1100. For example, the disk drive 1100 is a drive into which a removable storage medium such as a magnetic disk or an optical disk is inserted. For example, the serial port interface 1050 is connected to a mouse 1110 and a keyboard 1120. For example, the video adapter 1060 is connected to a display 1130.

Here, as illustrated in FIG. 8, the hard disk drive 1090 stores an operating system (OS) 1091, an application program 1092, a program module 1093, and program data 1094, for example. Each table described in the above embodiment is stored in the hard disk drive 1090 or the memory 1010, for example.

Furthermore, the information processing program is stored in the hard disk drive 1090 as, for example, a program module describing commands to be executed by the computer 1000. Specifically, the program module 1093 describing each processing to be executed by the computer 1000 described in the above embodiment is stored in the hard disk drive 1090.

Furthermore, data used for information processing performed by the information processing program is stored as program data in the hard disk drive 1090, for example. The CPU 1020 reads the program module 1093 and the program data 1094 stored in the hard disk drive 1090 to the RAM 1012 as necessary, and executes each procedure described above.

The program module 1093 and the program data 1094 related to the information processing program are not limited to the form of being stored in the hard disk drive 1090, and may be stored in a removable storage medium and read by the CPU 1020 via the disk drive 1100 or the like, for example. Alternatively, the program module 1093 and the program data 1094 related to the control program may be stored in another computer connected via a network such as a LAN or a Wide Area Network (WAN) and read by the CPU1020 via the network interface 1070.

### [Others]

Various embodiments, described herein in detail with reference to the drawings as a plurality of embodiments, are merely examples and are not intended to limit the present invention to the plurality of embodiments. The features described herein may be implemented by various methods, including various modifications and improvements based on the knowledge of those skilled in the art.

In addition, the "terms such as a module, a part, or a noun with suffix -er or suffix -or)" described above can be read as a unit, a means, a circuit, or the like. For example, a communication module, a control module, and a storage module can be replaced with a communication unit, a control unit, and a storage unit, respectively.

### Explanation of Reference

- 1: INFORMATION PROCESSING SYSTEM
- 100: UPPER NW DEVICE
- 110: COMMUNICATION MODULE
- 120: CONTROL MODULE
- 121: BLOCKER
- 130: STORAGE MODULE
- 200: LOWER NW DEVICE
- 210: COMMUNICATION MODULE
- 220: CONTROL MODULE
- 221: ACQUIRER
- 222: DETECTOR
- 223: NOTIFIER
- 230: STORAGE MODULE

## Claims

1. An information processing system comprising: an upper NW device being a device constituting an overlay network; and a lower NW device being a device constituting an underlay network,
wherein the upper NW device includes
a blocker that blocks unauthorized communication notification of which is provided from the lower NW device based on information regarding unauthorized communication, and
the lower NW device includes:
an acquirer that acquires information related to communication of a terminal connected to the lower NW device;
a detector that detects unauthorized communication based on information related to communication of a terminal connected to the lower NW device, acquired by the acquirer; and
a notifier that notifies the upper NW device of the information regarding the unauthorized communication detected by the detector.

2. The information processing system according to claim 1,
wherein the detector detects unauthorized communication by performing matching between the information related to communication of the terminal connected to the lower NW device, acquired by the acquirer and the information related to unauthorized communication stored in a storage module.

3. The information processing system according to claim 1,
wherein the blocker blocks communication of the unauthorized communication notification of which is provided by the lower NW device to a communication destination by using the information regarding the unauthorized communication.

4. An information processing method to be executed by an upper NW device being a device constituting an overlay network, and a lower NW device being a device constituting an underlay network, the information processing method comprising:
an acquisition process of acquiring, by the lower NW device, information related to communication of a terminal connected to the lower NW device;
a detection step of detecting, by the lower NW device, unauthorized communication based on the information related to the communication of the terminal connected to the lower NW device acquired by the acquisition process;
a notification process of notifying, by the lower NW device, the upper NW device of the information regarding the unauthorized communication detected by the detection process; and
a blocking process of blocking, by the upper NW device, the unauthorized communication notification of which is provided from the lower NW device based on the information regarding the unauthorized communication.

5. An information processing program causing a computer functioning as an upper NW device being a device constituting an overlay network, and a computer functioning as a lower NW device being a device constituting an underlay network to execute following steps,
the information processing program causing the computer functioning as the upper NW device to execute:
a blocking step of blocking unauthorized communication notification of which is provided from the lower NW device based on information related to the unauthorized communication,
the information processing program causing the computer functioning as the lower NW device to execute:
an acquisition step of acquiring information related to communication of a terminal connected to the lower NW device;
a detection step of detecting the unauthorized communication based on the information related to the communication of the terminal connected to the lower NW device, acquired by the acquisition step; and
a notification step of notifying the upper NW device of information regarding the unauthorized communication detected by the detection step.
